# EUROPEAN PATENT SPECIFICATION

(11) **EP 2 298 059 B1**
(45) Date of publication and mention of the grant of the patent: **22.08.2012**
(21) Application number: 10175831.6
(22) Date of filing: 08.09.2010
(51) Int. Cl.: A01D 34/82

(54) **An exhaust system for a lawn mower**
Abgassystem für einen Rasenmäher
Système d'échappement pour tondeuse à gazon

(30) Priority: 22.09.2009 IT RE20090092
(43) Date of publication of application: 23.03.2011
(73) Proprietor: Emak S.p.A., 42011 Bagnolo in Piano (Reggio Emilia) (IT)
(72) Inventor: Bigi, Salvatore, 42011, BAGNOLO IN PIANO (REGGIO EMILIA) (IT)
(74) Representative: Corradini, Corrado

(56) References cited:
- EP-A1- 1 225 317
- DE-A1- 2 052 666
- FR-A- 1 270 634
- FR-A1- 2 483 737
- GB-A- 2 267 809
- US-A- 2 708 818

## Description

The present invention relates to small lawn-mowing machines in which an internal combustion engine activates a rotary blade closed in a casing located at a short distance from the ground.

These machines can be self-propelling, and sometimes they comprise a frame with a seat for an operator. One of the problems which most frequently handicap these known lawn-mowers is the very loud noise they generate, which is a disturbance even at a considerable distance from the site in which the machine is working.

These machines are activated by small two-stroke engines which must have a small cylinder capacity and must also be small; they operate at high revolutions. These engines are generally manufactured in large series by various companies, and are of such standard size and power as to be mountable on various models of lawnmower.

Document EP 1 225 317 discloses an exhaust system for a lawnmower comprising an internal combustion engine which activates a rotary blade contained in a bell-shaped casing that is inferiorly open, in which the engine exhaust port is set in communication with a conduit that communicates with an inside of the casing.

Thus there is the need, for the manufactures of lawnmowers, to reduce engine noise independently of the type and characteristics of the engine which is mounted on them.

The aim of the present invention is to make available a lawnmower of the above-indicated type with a substantially lowered engine noise level.

This aim is attained by a machine having the characteristics as recited in the independent claim.

The dependent claims recite characteristics which improve the effectiveness of the solution set down in the independent claim.

In particular, the result is attained by placing the exhaust gas conduit in communication with the casing covering the rotary blade.

The exhaust pipe is preferably inserted in the upper part of the casing.

This can be done with a flexible or shaped pipe, or even preferentially in the way delineated herein below.

It is further preferable, though not essential, for the outlet mouth of the exhaust pipe to be provided with a deflector which prevents the gases from being directed towards the ground; preferably the gases are directed in the same direction as the rotating blade.

In a preferred embodiment, an expansion chamber of the exhaust gases, or a silencer, is interposed between the engine exhaust port and the pipe.

According to the invention, the combustion gas exhaust conduit exhibits a terminal tract which inserts in a larger-diameter pipe which derives in turn from the casing. The larger-diameter pipe is derived superiorly from the casing in proximity of the advantageously spiral-conformed peripheral portion thereof.

The advantages and constructional and functional characteristics of the invention will better emerge from the detailed description that follows, illustrated by the figures of the accompany tables of drawings, which show a preferred embodiment of the invention given by way of non-limiting example.

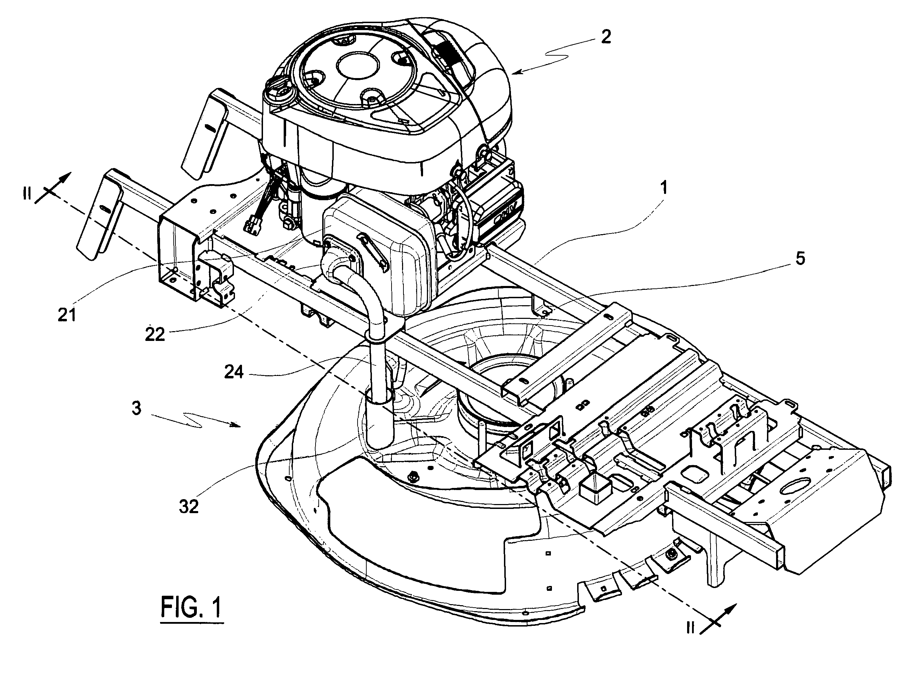

Figure 1 is a machine according to the invention in a perspective view.

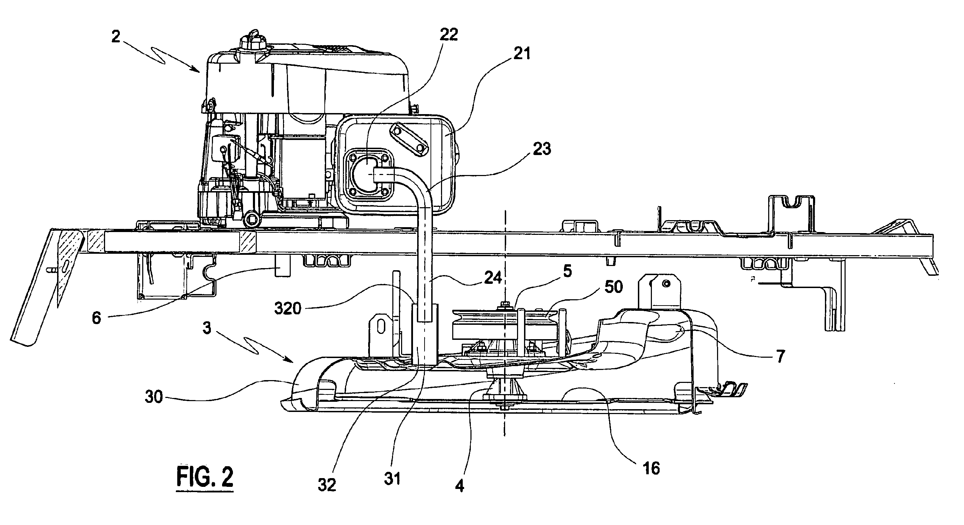

Figure 2 is section II-II, partially exploded, of figure 1.

The figures illustrate the frame 1 of the lawnmower on which the engine 2 is mounted.

A casing 3 is stably constrained below the frame 1, which casing is inferiorly bell-shaped, the hub 4 about which the shaft 5 rotates being supported at the centre thereof.

The shaft has keyed thereon, in the upper part exiting from the casing, a pulley 50 which receives motion from a drive pulley, not illustrated, keyed on the lower projecting spur 6 of the engine 2.

The lower part of the shaft has keyed thereon a diametral blade 6 which has the task of cutting grass.

To this end the lower blade 6 exhibits ends having a cutting edge, and is slightly twisted such as to facilitate aspiration of the cut grass internally of the casing to facilitate conveying thereof to a collection container, generally a sack, which is not illustrated.

For this purpose, the casing 3 exhibits, in proximity of the edge, an annular portion having a growing section which realises a sort of spiral 30 at a greater section of which the opening 7 for attaching the collection sack is afforded.

In the prior art, the discharge port of the engine 2 communicates with an expansion chamber, or silencer 21, which in turn communicates directly with the outside, generating a lower, but still undesired noise.

In the invention, a shaped pipe 23 is applied to the port of the expansion chamber 21 communicating with the outside, with interposed use of a connecting element 22, which shaped pipe 23 has a final tract 24 thereof directed downwards.

At the vertical tract the casing 3 exhibits a port 31, located immediately internally of an annular portion 30 having a progressively increasing section, from which a tract of vertical pipe 32 derives having a greater diameter than the diameter of the terminal tract 24 of the shaped tube 23.

The port 31 is in part masked by a deflector which deviates the exhaust gas in the same direction as the rotation direction of the blade.

The pipe 32 receives the terminal tract 24 of the tube 23, preferably leaving an ringed portion of hole 320 free.

Thanks to the above arrangement, instead of flowing directly into the atmosphere, the exhaust gases of the engine are sent into the casing, where they are expanded in a turbulent atmosphere.

Thanks to this the engine noise is drastically reduced up to practically zero. Where the annular portion of hole 320 is present, a depression is created thereat by venturi effect, which causes an aspiration of air from the outside. This further facilitates turbulent expansion of the exhaust gases and further reduces the noise level.

Relevant results have been obtained regarding noise reduction, even when the engine exhaust port is placed direction in communication with the casing protecting the blade, with no interposing of the expansion chamber or the silencer.

Good noise-reduction results have been obtained also when making the casing without the spiral part 30.

The invention is not limited to the above-described embodiment, and variants and improvements can be brought thereto without its forsaking the ambit of the following claims.

## Claims

1. An exhaust system for a lawnmower (1), comprising an internal combustion engine (2) which activates a rotary blade (16) contained in a bell-shaped casing (3) that is inferiorly open, the engine exhaust port (31) is set in communication with a conduit (23) that communicates with an inside of the casing (3) **characterized in that** the combustion gas exhaust conduit (23) exhibits a terminal tract (24) which inserts in a tube (32) having a greater diameter which in turn derives from the casing (3).

2. The exhaust system of claim 1, **characterised in that** an expansion chamber for exhaust gases, or a silencer (21), is interposed between the exhaust port of the engine (2) and the conduit (23).

3. The exhaust system of claim 1, **characterised in that** the conduit (23) communicating with the inside of the casing (3) is a flexible tube.

4. The exhaust system of claim 1, **characterised in that** the greater-diameter tube (32) superiorly derives from the casing (3), in proximity of a spiral portion (30) of the casing (3).

5. The exhaust system of claim 1, **characterised in that** the exhaust gas pipe (23) inserts in an upper part of the casing (3).

6. The exhaust system of claim 5, **characterised in that** the exhaust gas pipe (23) inserts in the casing (3) in proximity of the spiral portion (30) thereof.

## Patentansprüche

1. Abgassystem für einen Rasenmäher (1), umfassend einen Verbrennungsmotor (2), der ein rotierendes Messer (16) betätigt, das in einem glockenförmigen Gehäuse (3) enthalten ist, welches nach unten offen ist, wobei der Motorabgasanschluss (31) in Verbindung mit einer Leitung (23) angeschlossen ist, die in Verbindung mit einem Innenraum des Gehäuses (3) steht, **dadurch gekennzeichnet, dass** die Verbrennungsabgasleitung (23) einen Endtrakt (24) aufweist, der in einem Rohr (32) mit einem größeren Durchmesser mündet, das sich wiederum vom Gehäuse (3) aus erstreckt.

2. Abgassystem nach Anspruch 1, **dadurch gekennzeichnet, dass** zwischen den Abgasanschluss des Motors (2) und die Leitung (23) ein Auspufftopf für Abgase bzw. ein Schalldämpfer (21) angeordnet ist.

3. Abgassystem nach Anspruch 1, **dadurch gekennzeichnet, dass** die Leistung (23), die mit dem Innenraum des Gehäuses (3) in Verbindung steht, ein flexibles Rohr ist.

4. Abgassystem nach Anspruch 1, **dadurch gekennzeichnet, dass** sich das Rohr mit größerem Durchmesser (32) über dem Gehäuse (3) in der Nähe eines spiralförmigen Abschnitts (30) des Gehäuses (3) erstreckt.

5. Abgassystem nach Anspruch 1, **dadurch gekennzeichnet, dass** die Abgasleitung (23) in einen oberen Teil des Gehäuses (3) mündet.

6. Abgassystem nach Anspruch 5, **dadurch gekennzeichnet, dass** die Abgasleitung (23) in das Gehäuse (3) in der Nähe seines spiralförmigen Abschnitts (30) mündet.

## Revendications

1. Système d'échappement pour une tondeuse à gazon (1), comprenant un moteur à combustion interne (2) qui entraîne une lame rotative (16) contenue dans un boîtier en forme de cloche (3) ouvert dans sa partie inférieure, l'orifice d'échappement du moteur (31) étant en communication avec un conduit (23) qui communique avec l'intérieur du boîtier (3), **caractérisé en ce que** le conduit d'échappement des gaz de combustion (23) présente une portion terminale (24) qui s'insère dans un tube (32) ayant un diamètre plus grand, qui provient à son tour du boîtier (3).

2. Système d'échappement selon la revendication 1, **caractérisé en ce qu'**une chambre d'expansion pour les gaz d'échappement, ou un silencieux (21), est interposé(e) entre l'orifice d'échappement du moteur (2) et le conduit (23).

3. Système d'échappement selon la revendication 1, **caractérisé en ce que** le conduit (23) qui communique avec l'intérieur du boîtier (3) est un tube flexible.

4. Système d'échappement selon la revendication 1, **caractérisé en ce que** le tube de plus grand diamètre (32) provient du boîtier (3) par le haut, à proximité d'une partie en forme de spirale (30) du boîtier (3).

5. Système d'échappement selon la revendication 1, **caractérisé en ce que** le tuyau de gaz d'échappement (23) est inséré dans une partie supérieure du boîtier (3).

6. Système d'échappement selon la revendication 5, **caractérisé en ce que** le tuyau de gaz d'échappement (23) est inséré dans le boîtier (3) à proximité de la partie en forme de spirale (30) de celui-ci.
